# EUROPÄISCHE PATENTANMELDUNG

(11) **EP 4 052 765 A1**
(43) Veröffentlichungstag der Anmeldung: **07.09.2022**
(21) Anmeldenummer: 22156119.4
(22) Anmeldetag: 10.02.2022
(51) Int. Cl.: A62C 3/07, A62C 3/16

(54) **KRAFTFAHRZEUG UND VERFAHREN ZUM EINLEITEN EINES LÖSCHMITTELS IN EINE BATTERIE**

(30) Priorität: 05.03.2021 DE 102021105356
(71) Anmelder: Audi AG, 85045 Ingolstadt (DE)
(72) Erfinder: Bäder, Dirk, 70734 Fellbach (DE); Grabowski, Michael, 85055 Ingolstadt (DE)

(57) **Zusammenfassung**

Die Erfindung betrifft ein Kraftfahrzeug (10) mit einer Batterie (12), die ein Batteriegehäuse (20) und mindestens eine im Batteriegehäuse (20) angeordnete Batteriezelle (14) aufweist, wobei das Kraftfahrzeug (10) eine Löschmittelleitung (16) zur Führung eines Löschmittels aufweist, die ein erstes Ende (18) umfasst, welches zumindest in das Batteriegehäuse (20) mündet, und ein zweites Ende (22) aufweist, welches in einen Bereich (26, 42, 44, 46) des Kraftfahrzeugs (10) mündet, welcher in einem Innenraum (28) des Kraftfahrzeugs (10) angeordnet ist. Dabei weist das zweite Ende (22) ein Kopplungselement (24) zum Koppeln mit einem Löschmittelreservoir (32) auf, wobei die Löschmittelleitung (16) eine unter mindestens einer vorbestimmten Bedingung freigebbare Verschlusseinrichtung (38) aufweist, die eine Löschmittelzufuhr durch das erste Ende (18) in ein Inneres des Batteriegehäuses (20) nur bei Erfülltsein der mindestens einen vorbestimmten Bedingung freigibt.

## Beschreibung

Die Erfindung betrifft ein Kraftfahrzeug mit einer Batterie, die ein Batteriegehäuse und mindestens eine im Batteriegehäuse angeordnete Batteriezelle aufweist. Dabei umfasst das Kraftfahrzeug weiterhin eine Löschmittelleitung zur Führung eines Löschmittels, die ein erstes Ende umfasst, welches zumindest in das Batteriegehäuse mündet, und ein zweites Ende aufweist, welches in einen Bereich des Kraftfahrzeug mündet, welcher in einem Innenraum des Kraftfahrzeugs angeordnet ist. Des Weiteren betrifft die Erfindung auch ein Verfahren zum Einleiten eines Löschmittels in eine Batterie für ein Kraftfahrzeug.

Kraftfahrzeugbatterien, insbesondere Hochvoltbatterien, weisen typischerweise vielzählige Batteriezellen auf, die optional zu Batteriemodulen zusammengefasst sein können. In solchen Hochvoltbatterien kann es unter Umständen, zum Beispiel im Falle eines Unfalls oder eines Kurzschlusses innerhalb der Batterie, zu einer sogenannten Thermal Propagation, das heißt einem thermischen Durchgehen, einer Batteriezelle kommen. Ein solches thermisches Durchgehen einer Batteriezelle äußert sich dabei anfangs in einer zunehmenden Temperatur dieser Batteriezelle, die dann ohne Gegenmaßnahme in der Regel in Flammen aufgeht oder explodiert. Durch die starke Temperaturentwicklung kommt es in der Regel auch zu einem thermischen Durchgehen benachbart angeordneter Batteriezellen, bis sich diese Thermal Propagation letztendlich durch die gesamte Hochvoltbatterie hindurch ausbreitet, die dann letztendlich insgesamt in Brand gerät. Steht eine solche Hochvoltbatterie erst einmal in Flammen, so kann diese in der Regel nur noch schwer gelöscht werden und normalerweise auch nur durch die Feuerwehr mit Spezialwerkzeug gelöscht werden, wie zum Beispiel mit einer Löschlanze, die durch den Fahrzeugboden geschossen wird, um das Batteriegehäuse zu fluten. Wünschenswert wäre es daher, eine solche Thermal Propagation möglichst frühzeitig aufhalten zu können oder diese zumindest so lang wie möglich hinauszögern zu können, insbesondere um dadurch auch zusätzliche Rettungsminuten für Insassen schaffen zu können.

In diesem Zusammenhang beschreibt die EP 3 204 978 B1 ein Batteriesystem für ein Fahrzeug mit Steigungen zur Verteilung von Kühlwasser. Durch eine oberhalb der Batteriemodule vorgesehene Steigung mit Durchgangsöffnungen kann das Löschwasser über die einzelnen Batteriemodule besser verteilt werden. Das Löschwasser kann dabei über eine Öffnung im Innenraum des Kraftfahrzeugs, zum Beispiel im Passagierraum, der Verteilervorrichtung zugeführt werden. Die Feuerwehr kann entsprechend den Feuerwehrschlauch auf diese Öffnung richten, um Löschwasser der Verteilervorrichtung zum Löschen der Batterie zuzuführen oder den Innenraum des Kraftfahrzeugs fluten. Auch in diesem Fall kann ein Löschen der Batterie erst erfolgen, wenn die Feuerwehr eingetroffen ist.

Des Weiteren beschreibt die DE 10 2008 059 948 A1 ein Verfahren und eine Vorrichtung zur Brandprävention und/oder zur Brandbekämpfung für eine Lithium-lonen-Batterie eines Fahrzeugs, bei welcher über eine Notfallleitung ein Löschmittel in einen Innenraum einer Kraftfahrzeugbatterie eingeführt wird. Das Löschmittel kann dabei in einem Löschmittelspeicher im Kraftfahrzeug gespeichert sein. Dieser Löschmittelspeicher kann weiterhin auch durch einen Kühlmittelkreislauf des Kraftfahrzeugs bereitgestellt sein, wobei als Kühlmittel CO₂ verwendet wird. Durch seine erstickende Wirkung kann mittels CO₂ zwar ein Brand bekämpft werden, allerdings findet hier eine Brandbekämpfung wiederum zu einem sehr späten Zeitpunkt statt. Die geteilte Nutzung eines Kühlmittels als Löschmittel hat zudem den Nachteil, dass keine Optimierungsmöglichkeit des betreffenden Fluids auf seine auszuführende Funktion bereitgestellt ist. Das Vorsehen eines separaten Löschmitteltanks dagegen hat den Nachteil, dass hierfür zusätzlich Bauraum im Kraftfahrzeug vorgesehen werden muss, der dann letztendlich permanent für die Aufnahme des Löschmitteltanks reserviert ist.

Weiterhin beschreibt die KR 20180003272 U einen Feuerlöscher für ein Kraftfahrzeug zum Löschen eines Motorbrands. Dieser kann über eine Schnellkupplung mit einer an der Motorhaube vorgesehenen Leitung, die in den Motorraum führt, angeschlossen werden, um einen Motorbrand zu löschen. Dies hat jedoch den Nachteil, dass hierbei die Löschmaßnahmen manuell von einem Benutzer durchgeführt werden müssen. Gerät eine Batterie und nicht ein Motor in Flammen, so wäre eine solche manuelle Löschmaßnahme von einem Benutzer nicht mehr ausführbar.

Weiterhin beschreibt die US 2012/0168184 A1 ein Feuerbekämpfungssystem für einen Container, welches zwei Tanks aufweist, die mit einer jeweiligen flüssigen Komponente befüllt sind, die im Falle eines Brands zu einem zweiteiligen Schaum gemischt werden und über Düsen ähnlich einer Sprinkleranlage in gemischter Form ausgegeben werden können. Ein solches System ist dabei auch in ein Kraftfahrzeug zum Löschen einer Batterie integrierbar. Auch hierbei entsteht der enorme Nachteil, dass durch diese fest verbauten Tanks bei der Integration eines solchen Systems in ein Kraftfahrzeug extrem viel Bauraum beansprucht wird, der entsprechend nicht mehr flexibel nutzbar ist.

Aufgabe der vorliegenden Erfindung ist es daher, ein Kraftfahrzeug und ein Verfahren bereitzustellen, die es ermöglichen, ein Löschmittel möglichst frühzeitig und flexibel in eine Batterie einzuleiten.

Diese Aufgabe wird gelöst durch ein Kraftfahrzeug und ein Verfahren mit den Merkmalen gemäß den jeweiligen unabhängigen Patentansprüchen. Vorteilhafte Ausgestaltungen der Erfindung sind Gegenstand der abhängigen Patentansprüche, der Beschreibung sowie der Figuren.

Ein erfindungsgemäßes Kraftfahrzeug weist eine Batterie auf, die ein Batteriegehäuse und mindestens eine im Batteriegehäuse angeordnete Batteriezelle aufweist. Dabei umfasst das Kraftfahrzeug weiterhin eine Löschmittelleitung zur Führung eines Löschmittels, die ein erstes Ende umfasst, welches zumindest in das Batteriegehäuse mündet, und ein zweites Ende aufweist, welches in einen Bereich des Kraftfahrzeugs mündet, welcher in einem Innenraum des Kraftfahrzeugs angeordnet ist. Dabei weist das zweite Ende ein Kopplungselement zum Koppeln mit einem Löschmittelreservoir auf, wobei die Löschmittelleitung eine unter mindestens einer vorbestimmten Bedingung freigebbare Verschlusseinrichtung aufweist, die eine Löschmittelzufuhr durch das erste Ende in ein Inneres des Batteriegehäuses nur bei Erfülltsein der mindestens einen vorbestimmten Bedingung freigibt.

Die Erfindung ermöglicht es somit vorteilhafterweise, ein Löschmittelreservoir, wie zum Beispiel einen Feuerlöscher, flexibel an die Löschmittelleitung anzuschließen, sodass zum Beispiel das Löschmittel aus dem Feuerlöscher im an die Löschmittelleitung angeschlossenen Zustand des Feuerlöschers bei Bedarf in die Batterie eingeleitet werden kann. Daraus ergeben sich gegenüber den bisherigen Löschkonzepten zahlreiche Vorteile: Zum einen wird hierdurch eine frühzeitige Löschung oder Kühlung einer Batterie ermöglicht, insbesondere noch bevor überhaupt ein Batteriebrand entstanden ist, und zum Beispiel auch bevor eine Feuerwehr an einem Unfallort eintrifft. Die Verschlusseinrichtung kann zum Beispiel automatisch freigegeben werden, sobald irgendeine Art kritischer Zustand der mindestens einen Batteriezelle, zum Beispiel eine erhöhte Temperatur, festgestellt wird. Das Löschmittel kann dann vorteilhafterweise automatisch ohne das Zutun eines Benutzers in die Batterie eingeleitet werden. Eine Einleitung kann damit auch ohne Anwesenheit eines Benutzers erfolgen, der sich zwischenzeitlich aus dem Fahrzeug und in Sicherheit begeben kann. Weiterhin ist es durch die flexible und vor allem reversible Kopplungsmöglichkeit des Löschmittelreservoirs möglich, dieses flexibel an die Löschmittelleitung anzuschließen, von dieser zu entkoppeln und auszutauschen. Beispielsweise können auch mehrere Feuerlöscher von einem Fahrer im Fahrzeug mitgeführt werden und im Notfall zeitlich sequentiell an die Löschmittelleitung angeschlossen werden. Ist also ein Löschmittelreservoir bereits leer, so kann, falls weiterer Kühl- oder Löschbedarf vorhanden ist, einfach ein weiteres mitgeführtes Löschmittelreservoir an die Löschmittelleitung angeschlossen werden. Diese Löschmittelreservoire, die zur Vereinfachung im Nachfolgenden auch einfach als Feuerlöscher bezeichnet werden, können dann beliebig im Kraftfahrzeug verteilt mitgeführt werden, zum Beispiel je nach vorhandenem Bauraum. Auch kann zum Beispiel nach Eintreffen der Feuerwehr ein neuer, noch voller Feuerlöscher an die Löschmittelleitung angeschlossen werden. Zudem ist es auch vorteilhafterweise möglich, den Feuerlöscher abzukoppeln und zum Beispiel zum Löschen eines anderen Brandherds, zum Beispiel auch eines anderen Fahrzeugs, zu verwenden. Auch wenn kein Löschbedarf vorhanden ist, so müssen Löschmittelreservoire, wie beispielsweise Feuerlöscher, auch regelmäßig gewartet oder ausgetauscht werden, um im Notfall eine einwandfreie Funktionsfähigkeit zu gewährleisten. Bei fest in das Fahrzeug integrierten Löschmittelreservoiren wäre dies mit einem sehr hohen Aufwand verbunden. Durch die vorliegende Erfindung ist es vorteilhafterweise möglich, einen Feuerlöscher auch bei Nichtgebrauch nach mehreren Jahren einfach gegen einen neuen auszutauschen. Der für einen Benutzer zugängliche Bereich im Kraftfahrzeuginnenraum, in welchem das zweite Ende mit dem Kopplungselement zum Koppeln mit dem Feuerlöscher mündet, kann zudem relativ klein sein. Dieser muss lediglich zur Aufnahme eines kleinen Löschmittelreservoirs, wie zum Beispiel eines kleinen Feuerlöschers, zum Beispiel mit einem Volumen zwischen 500 Millilitern und 2 Litern oder im Allgemeinen zwischen 0,3 Litern und 5 Litern, ausgelegt sein. Nichtsdestoweniger bleibt dieser Bereich auch weiterhin flexibel nutzbar, da der Feuerlöscher nicht notwendigerweise permanent mit dem Kopplungselement gekoppelt sein muss. Prinzipiell ist es auch denkbar, diesen Feuerlöscher an anderer Position aufzubewahren, und dann erst im Notfall mit dem Kopplungselement zu verbinden. Insgesamt stellt die Erfindung hierdurch zahlreiche Möglichkeiten bereit, wie ein einerseits sehr frühzeitiges Zuführen eines Löschmittels zu einer Batterie bereitgestellt wird, die gleichzeitig eine äußerst flexible Bauraumnutzung ermöglichen.

Bei der Batterie kann es sich, wie eingangs erwähnt, um eine Hochvoltbatterie handeln. Zudem kann die Batterie auch mehrere im Batteriegehäuse aufgenommene Batteriezellen aufweisen. Beispielsweise kann die Batterie auch mehrere Batteriemodule mit jeweils mehreren Batteriezellen umfassen. Der Begriff Batteriezelle soll dabei als Einzelzelle verstanden werden. Die Batteriezellen beziehungsweise die mindestens eine Batteriezelle kann zum Beispiel als Lithium-Ionen-Zelle ausgebildet sein. Die Löschmittelleitung kann zumindest zum Teil oder vollständig flexibel, zum Beispiel als Schlauch, ausgebildet sein und/oder zumindest zum Teil oder vollständig starr, zum Beispiel als Rohr. Dass das erste Ende der Löschmittelleitung zumindest in das Batteriegehäuse mündet, soll dabei so verstanden werden, dass dieses unter Umständen, zum Beispiel wenn im Batteriegehäuse ein Batteriemodul angeordnet ist, welches seinerseits wiederum ein Modulgehäuse aufweist, in welchem die mindestens eine Batteriezelle aufgenommen ist, auch bis direkt in das Modulgehäuse führen kann. Vorzugsweise ist die Löschmittelleitung dabei zudem derart ausgebildet, dass ein Löschmittel derart in die Batterie einleitbar ist, dass dieses eingeleitete Löschmittel in direkten Kontakt mit der mindestens einen Batteriezelle bringbar ist, und zum Beispiel das Zellgehäuse direkt kontaktieren kann. Dies beruht wiederum auf der Erkenntnis, dass sich durch einen direkten Kontakt mit einer thermisch durgehenden Batteriezelle dieses thermische Durchgehen auf effizienteste Weise aufhalten oder zumindest hinauszögern lässt, selbst wenn dadurch die Kurzschlussgefahr, je nach Verwendung mit dem Löschmittel, gegebenenfalls erhöht ist. Die Kühlwirkung des Löschmittels kann sich so am effektivsten entfalten und ein Überspringen des thermischen Durchgehens auf andere Batteriezellen hinausgezögert oder sogar ganz verhindert werden.

Um dabei ein noch effizienteres Aufhalten eines thermischen Durchgehens mindestens einer Batteriezelle zu ermöglichen, gerade wenn die Batterie mehrere Batteriezellen umfasst, ist es bevorzugt, dass die Batterie zum Beispiel eine Verteilereinrichtung aufweist, die ein selektives Zuführen eines Löschmittels zu einem jeweiligen Batteriebereich ermöglicht, wobei die Batterie entsprechend mehrere solcher Batteriebereiche aufweist, wobei in einem jeweiligen Batteriebereich mindestens eine Batteriezelle aufgenommen ist. Beispielsweise kann in einem jeweiligen Batteriebereich ein Batteriemodul mit jeweils mehreren Batteriezellen angeordnet sein. Die Batteriebereiche können räumlich voneinander separiert sein und zum Beispiel durch jeweilige Kammern des Batteriegehäuses bereitgestellt sein. Die Batteriebereiche können aber auch durch Batteriemodule selbst bereitgestellt sein, die jeweils wiederum ein eigenes Modulgehäuse aufweisen. Mit anderen Worten ist es durch eine solche Verteilervorrichtung möglich, das Löschmittel gezielt einem Batteriemodul zuzuführen, sodass dieses in direkten Kontakt mit den jeweiligen Batteriezellen dieses Batteriemoduls gebracht wird, ohne dass davon andere Batteriemodule und deren Zellen betroffen sind. Das Kurzschlussrisiko anderer noch intakter Batteriezellen kann dadurch reduziert werden, während gleichzeitig die thermische Propagation einer betroffenen Batteriezelle durch das direkte Einleiten des Löschmittels unterbunden werden kann. Eine solche Verteilervorrichtung insbesondere in Kombination mit den jeweiligen räumlich separierten Batteriebereichen hat zudem noch den großen Vorteil, dass hierdurch ein besonders effizientes Löschen oder Kühlen der betroffenen Batteriezelle ermöglicht wird, selbst wenn nur eine äußerst begrenzte Löschmittelmenge zur Verfügung steht. Diese kann gezielt in den räumlich begrenzten Bereich mit der betroffenen Batteriezelle eingeleitet werden, sodass diese effizient gekühlt werden kann. Dadurch ist entsprechend deutlich weniger Löschmittel erforderlich, als wenn dieses sich über eine gesamte Hochvoltbatterie verteilen würde. Um eine solche Verteilervorrichtung bereitzustellen, kann sich die Löschmittelleitung in Richtung ihres ersten Endes zum Beispiel verzweigen und mehrere erste Enden aufweisen, die jeweils in einen entsprechenden Batteriebereich münden. Dabei kann ein jeweiliges zweites Ende der Löschmittelleitung mit einem entsprechenden Ventil oder einer anderen Verschlusseinrichtung versehen sein, die ein selektives Öffnen ermöglicht.

Darüber hinaus soll im Rahmen der vorliegenden Erfindung unter einem Löschmittel auch ein Kühlmittel verstanden werden können. Mit anderen Worten soll das Löschmittel nicht erst bei einem Batteriebrand zum Löschen zum Einsatz kommen können, sondern bereits auch schon vor dem Entstehen eines Brandes, um zum Beispiel eine überhitzte Batteriezelle zu kühlen und dadurch den Ausbruch eines Brandes zu verhindern.

Des Weiteren ist es bevorzugt, dass zweite Ende in einen Bereich des Kraftfahrzeugs mündet, der einen für einen Benutzer zugänglichen Bereich darstellt. Dies erleichtert z.B. das Austauschen des Feuerlöschers. Zudem kann das Kopplungselement zum reversiblen Koppeln mit dem Löschmittelreservoir ausgebildet sein. Dies ermöglicht ein zerstörungsfreies Abkoppeln des Löschmittelreservoirs, zum Beispiel zum Zwecke des Austauschs.

Bei einer weiteren sehr vorteilhaften Ausgestaltung der Erfindung ist die Löschmittelleitung derart ausgeführt, dass, wenn das Löschmittelreservoir mit einem im Löschmittelreservoir aufgenommenen Löschmittel mit dem Kopplungselement gekoppelt ist und wenn die mindestens eine vorbestimmte Bedingung erfüllt ist, das Löschmittel durch Freigeben der Verschlusseinrichtung automatisch in das Innere des Batteriegehäuses führbar ist. Dies hat den großen Vorteil, dass das Zuführen des Löschmittels in das Innere des Batteriegehäuses automatisch ohne das Zutun eines Benutzers erfolgen kann. Dies ermöglicht ein rechtzeitiges und besonders frühzeitiges Einleiten eines Löschmittels in die Batterie für den Fall einer beginnenden thermischen Propagation. Das Löschmittelreservoir kann zum Beispiel permanent mit der Löschmittelleitung gekoppelt werden und im Kraftfahrzeug mitgeführt werden. Sobald aus irgendwelchen Gründen eine Anomalie in der Batterie detektiert wird, die auf ein mögliches thermisches Event hinweist, kann auch sofort, ohne zeitliche Verzögerung, eine Löschmittelzufuhr ausgelöst werden. Das im Löschmittelreservoir aufgenommene Löschmittel kann dann bei freigegebener Verschlusseinrichtung direkt über die Löschmittelleitung in die Batterie eingeführt werden.

Bei einer weiteren sehr vorteilhaften Ausgestaltung der Erfindung ist das Kopplungselement als Teil einer Schnellkupplung ausgestaltet. Dies erlaubt ein einfaches und schnelles Anstecken des Löschmittelreservoirs an das zweite Ende der Löschmittelleitung, ebenso wie ein sehr einfaches Entkoppeln des Löschmittelreservoirs von der Löschmittelleitung. Zudem ermöglicht eine solche Schnellkupplung eine fluiddichte Verbindung zwischen dem Löschmittelreservoir und der Löschmittelleitung. Das Kopplungselement kann zum Beispiel als ein erster Teil einer solchen Schnellkupplung ausgebildet sein, wobei das Löschmittelreservoir mit einem korrespondierenden zweiten Teil einer solchen Schnellkupplung ausgestaltet ist. Der erste und zweite Teil können dann jeweils als männlicher beziehungsweise korrespondierender weiblicher Teil einer solchen Schnellkupplung ausgestaltet sein. Damit lassen sich die beiden komplementären Teile einer solchen Schnellkupplung einfach ineinanderstecken und wieder auseinanderstecken.

Weiterhin ist es besonders vorteilhaft, wenn die Verschlusseinrichtung im Kopplungselement integriert ist. Dies verhindert, dass Löschmittel in die Löschmittelleitung eindringen kann, solange die Verschlusseinrichtung verschlossen ist. Damit kann die Batterie sicher vom Löschmittel entfernt gehalten werden, solange kein kritischer Zustand vorliegt. Das Löschmittel dringt also erst im Notfall in die Löschmittelleitung beziehungsweise in den von dem Kopplungselement und der Verschlusseinrichtung verschiedenen Teil der Löschmittelleitung ein. Damit ist, sollte kein Notfall eintreten, auch keine Wartung oder Reinigung dieser Löschmittelleitung erforderlich. Es kann also kein Löschmittel vorab in die Löschmittelleitung eindringen und diese gegebenenfalls verkleben oder zum Teil blockieren.

Bei einer weiteren sehr vorteilhaften Ausgestaltung der Erfindung ist die erste Bedingung erfüllt, wenn ein kritischer Zustand der mindestens einen Batteriezelle gemäß einem vorbestimmten Kriterium erfasst ist, insbesondere wenn eine Temperatur innerhalb des Batteriegehäuses größer ist als ein vorbestimmter Grenzwert, der zwischen einschließlich 60 Grad Celsius und 80 Grad Celsius liegt. Das Freigeben der Verschlusseinrichtung in Abhängigkeit von der Temperatur in der Batterie, insbesondere in der Nähe der mindestens einen Batteriezelle, ist besonders vorteilhaft, da sich gerade anhand der Temperatur ein beginnendes thermisches Durchgehen einer Zelle besonders sicher erfassen lässt. Zudem lässt sich die Temperatur auf einfache Weise erfassen, da in einer Hochvoltbatterie ohnehin mehrere Temperatursensoren verbaut sind und die Temperatur auch zu Überwachungszwecken ohnehin detektiert wird. Gerade wenn die Temperatur, welche einer Batteriezelle zugeordnet ist, auf 60 bis 80 Grad Celsius steigt, so liegt sehr sicher ein beginnendes thermisches Durchgehen vor, das ohne Gegenmaßnahme nicht mehr aufzuhalten ist. Gleichzeitig liegt bei einer Temperatur zwischen 60 und 80 Grad Celsius in der Regel noch kein Brand vor. Damit ist noch ausreichend Zeit, um einen möglichen Batteriebrand zu verhindern, was erreicht werden kann, indem das Löschmittel der Batterie sofort zugeführt wird. Das Kraftfahrzeug kann also einen Temperatursensor oder im Allgemeinen eine Erfassungseinrichtung aufweisen, die dazu ausgelegt ist, die der mindestens einen Batteriezelle zugeordnete Temperatur oder im Allgemeinen eine Temperatur innerhalb des Batteriegehäuses zu erfassen und bei Überschreiten des Grenzwertes ein Signal an die Verschlusseinrichtung zu übermitteln. Entsprechend öffnet die Verschlusseinrichtung unmittelbar nach Empfang des Signals.

Bei einer weiteren sehr vorteilhaften Ausgestaltung der Erfindung ist das Kopplungselement zur Kopplung mit einem als Feuerlöscher, insbesondere Lithium-Ionen-Feuerlöscher, ausgebildeten Löschmittelreservoir ausgebildet. Dabei kann das Kopplungselement auch weiterhin als Teil einer Schnellkupplung bereitgestellt sein. Auch ein solcher Feuerlöscher kann einen komplementären Teil einer solchen Schnellkupplung zum Anschließen an das Kopplungselement aufweisen. Gegebenenfalls kann auch ein Adapterstück vorgesehen sein, über welches sich ein herkömmlicher Feuerlöscher an einen Schnellkupplungsanschluss anschließen lässt. Die Anschlussmöglichkeit eines herkömmlichen Feuerlöschers an einen Schnellkupplungsanschluss, mit oder ohne Adapter, ist besonders vorteilhaft, da auf diese Weise Lithium-Ionen-Feuerlöscher standardisiert bereitgestellt und verwendet werden können, was den Austausch eines Feuerlöschers enorm vereinfacht. Weiterhin ist es möglich, einen solchen Feuerlöscher auch unabhängig von der Kupplung mit der Löschmittelleitung zu verwenden. Dies ermöglicht es beispielsweise, auch im Falle eines anderen Brandherds diesen mittels des Feuerlöschers zu löschen. Dies erlaubt noch flexiblere Einsatzmöglichkeiten. Gerade in Bezug auf das Löschen von Kraftfahrzeugbatterien, insbesondere Lithium-Ionen-Batterien, sind Löschmedien wie zum Beispiel verflüssigtes Vermiculit, insbesondere auf Dispersionsbasis, oder Wasser-Schaum-Gemische geeignet. Das Löschmittel erfüllt dabei bevorzug mehrere Funktionen, wie ein Kühlen und einen Sauerstoffabschluss und ist, insbesondere im Falle der Verwendung eines Schaums bzw. Wasser-Schaum-Gemischs vorzugsweise sehr temperaturbeständig und nicht brennbar. Als Löschmittel kann auch ein Löschgas, wie zum Beispiel CO₂ oder N₂ bereitgestellt sein. Anstelle eines herkömmlichen Feuerlöschers ist dann zum Beispiel auch ein Drucktank als Löschmittelreservoir, insbesondere mit einer Expansionseinheit, denkbar. Eine solche Expansionseinheit ermöglicht vorteilhafterweise eine Expansionskühlung. Die Expansionseinheit kann zum Beispiel im Bereich des Kopplungselements, bevorzugt jedoch im Bereich des ersten Endes der Löschmittelleitung, vorgesehen sein. Hierdurch ist es möglich, ein Gas derart zu expandieren, dass dieses sehr stark abkühlt, insbesondere unter 0 Grad, insbesondere auch unter - 20 Grad Celsius. Dies ermöglicht ein Einfrieren der betreffenden Batteriezellen, wodurch das thermische Durchgehen auf besonders effiziente Weise unterbrochen beziehungsweise hinausgezögert werden kann. So kann auch mit einem Löschgas eine effiziente Kühlung der mindestens einen Batteriezelle im Falle eines thermischen Durchgehens bereitgestellt werden. So besteht also vorteilhafterweise die Möglichkeit, eine thermische Propagation einzelner Batteriezellen sofort nach Detektion lokal mit einem Feuerlöscher zu löschen oder mittels Expansionskühlung einzufrieren.

Weiterhin ist es vorteilhaft, wenn das Kopplungselement zum Beispiel derart ausgestaltet ist, dass ein das Löschmittelreservoir im nicht mit dem Kopplungselement gekoppelten Zustand verschließender Verschluss, wenn das Löschmittelreservoirs mit dem Kopplungselement gekoppelt wird, zumindest für eine Zeitdauer der Kopplung mit dem Kopplungselement durch das Kopplungselement geöffnet wird. Mit anderen Worten kann es vorgesehen sein, dass ein Verschluss, der das Löschmittelreservoir im nicht gekoppelten Zustand verschließt, um ein Austreten des Löschmittels aus dem Löschmittelreservoir zu verhindern, automatisch geöffnet wird, sobald dieses Löschmittelreservoir mit dem Kopplungselement gekoppelt wird. Das Öffnen des Verschlusses kann durch eine Vorrichtung des Kopplungselements bewerkstelligt werden. Ein solcher Verschluss kann dabei auch mittels des Kopplungselements reversibel verschließbar sein. Wird zum Beispiel das Löschmittelreservoir im noch befüllten Zustand wieder abgekoppelt, so kann dieser dem Löschmittelreservoir zugeordnete Verschluss auch wieder automatisch verschließbar sein. Alternativ kann ein solcher Verschluss beim Koppeln mit dem Kopplungselement auch manuell freigebbar sein. Beispielsweise kann ein Benutzer, wenn er das Löschmittelreservoir, zum Beispiel einen Feuerlöscher, an das Kopplungselement anschließt, manuell eine Entriegelung des Feuerlöschers betätigen, um diesen sozusagen scharfzustellen. Nichtsdestoweniger wird durch die der Löschmittelleitung zugeordnete Verschlusseinrichtung gewährleistet, dass dennoch zu diesem Zeitpunkt kein Löschmittel in die Batterie gelangt. Erst wenn die vorbestimmte Bedingung erfüllt ist, wird letztendlich die Verschlusseinrichtung der Löschmittelleitung automatisch freigegeben und das Löschmittel kann automatisch in die Batterie geführt werden.

Der für den Benutzer zugängliche Bereich im Innenraum des Kraftfahrzeugs muss dabei nicht notwendigerweise auf einen Passagierraum beschränkt sein. Bei einem Innenraum des Kraftfahrzeugs ist grundsätzlich jeder von außerhalb des Kraftfahrzeugs im verschlossenen Zustand des Kraftfahrzeugs nicht ohne Gewalteinwirkung zugängliche Bereich zu verstehen. Darunter fällt zum Beispiel auch ein Kofferraum, insbesondere Heckkofferraum, oder ein Bereich unter der Motorhaube bzw. Frontkofferraum. Besonders vorteilhaft ist es dabei, wenn der für den Benutzer zugängliche Bereich des Kraftfahrzeugs unter einem Sitz des Kraftfahrzeugs, insbesondere einem Fahrersitz, und/oder im Bereich einer Mittelkonsole des Kraftfahrzeugs und/oder im Bereich der Fond-Mittelkonsole des Kraftfahrzeugs und/oder in einem Fußraum der Beifahrerseite des Kraftfahrzeugs und/oder in einem Kofferraum des Kraftfahrzeugs angeordnet ist. Gerade unter den Vordersitzen eines Kraftfahrzeugs und auch an den anderen genannten Positionen, vor Allem im Mittelkonsolenbereich, ist typischerweise ausreichend Platz, um dort zumindest einen kleinen Feuerlöscher positionieren zu können. Zudem ist dieser Bereich für einen Benutzer auch leicht zugänglich. In gleicher Weise ist es aber auch denkbar, diesen Bereich in einer Rücksitzbank des Kraftfahrzeugs vorzusehen. Gerade der Bereich unter einem Vordersitz und der Bereich der Mittelkonsole haben zudem den großen Vorteil, dass hier die Wegstrecke bis zur Batterie des Kraftfahrzeugs, die üblicherweise unter dem Boden des Passagierraums angeordnet ist, besonders kurz ist. Die Löschmittelleitung kann hierdurch sehr kurz ausgestaltet werden. Eine kurze Leitung hat dabei wiederum den großen Vorteil, dass das Risiko für eine eventuelle Blockade oder ein Verstopfen einer solchen Leitung minimiert wird. Durch diese kurze Ausführung der Löschmittelleitung kann das Löschmittel zudem besonders schnell der Batterie zugeführt werden. Längere Leitungswege sind, zum Beispiel nach einem Auslöseereignis, auch deutlich schwieriger zu reinigen. Entsprechend sind diese Positionierungen dieses für den Benutzer zugänglichen Bereichs im Innenraum besonders vorteilhaft. Ein weiterer großer Vorteil dieser Positionen bzw. des Verlaufs der Löschmittelleitung von einer dieser Positionen zur Batterie besteht zudem darin, dass es im Falle eines Crashs bei dieser Positionierung unwahrscheinlicher ist, dass eine Zuführleitung beschädigt wird, da der Interieurbereich um die Passagiere ein maximal geschützter Raum ist. Zudem ist das Batteriegehäuse, welches sich unmittelbar unter der Fahrgastzelle befindet, ebenfalls sehr gut im Falle eines Crashs geschützt, da es bei der Batterie wichtig ist, dass möglichst keine Intrusion in das Batteriegehäuse im Falle eines Crashs stattfindet. Somit gibt es in sehr vielen Situationen keine Relativbewegung zwischen Batterie und Fahrgastzelle, was entsprechend auch eine Zuführleitung an dieser Position bestmöglich schützt. Nichtsdestoweniger kann das Löschmittelreservoir auch in einem Kofferraum des Kraftfahrzeugs angeordnet werden beziehungsweise dort der für den Benutzer zugängliche Bereich vorgesehen sein, in den das zweite Ende der Löschmittelleitung mündet. Gerade im Heckkofferraum, zum Beispiel im Bereich einer Ersatzradmulde, ist typischerweise ausreichend Platz, um ein solches Löschmittelreservoir vorsehen zu können. Zudem ist dieser Bereich auch besonders einfach zugänglich, sodass der Austausch des Feuerlöschers für einen Benutzer sehr einfach ist. Nichtsdestoweniger sind aber auch andere Positionen für den für den Benutzer zugänglichen Bereich denkbar.

Bei einer weiteren sehr vorteilhaften Ausgestaltung der Erfindung umfasst das Kraftfahrzeug eine zweite Löschmittelleitung zur Führung eines Löschmittels, die ein drittes Ende aufweist, welches in das Batteriegehäuse oder in die erste Löschmittelleitung mündet, und ein viertes Ende aufweist, welches in einen für einen Benutzer zugänglichen zweiten Bereich des Kraftfahrzeugs, welcher in einem Innenraum des Kraftfahrzeugs angeordnet ist, mündet, wobei das vierte Ende ein zweites Kopplungselement zum reversiblen Koppeln mit einem Löschmittelreservoir aufweist. Mit anderen Worten können mehrere solcher Kopplungsstellen zum Koppeln mit einem Löschmittelreservoir vorgesehen sein. Dies hat gleich mehrere Vorteile. Zum einen kann zum Beispiel der Benutzer selbst wählen, mit welcher Löschmittelleitung er ein Löschmittelreservoir, wie zum Beispiel einen Feuerlöscher, koppeln möchte. Dies kann er dann entsprechend nach dem zur Verfügung stehenden Bauraum oder seinen Nutzungswünschen bezüglich dieses Bauraums entscheiden. Zudem ist es auch möglich, gleichzeitig mit beiden Kopplungselementen ein jeweiliges Löschmittelreservoir, wie zum Beispiel einen jeweiligen Feuerlöscher, zu koppeln. Dadurch kann die letztendlich bereitstellbare Löschmittelmenge verdoppelt werden. Dadurch kann der Löschvorgang im Notfall noch effizienter gestaltet werden. Durch die redundante Löschmittelbereitstellung ist zudem auch ein erhöhtes Maß an Sicherheit geboten, zum Beispiel für den Fall eines Defekts einer Löschmittelleitung. Entsprechend ist es vorteilhaft, wenn zum Beispiel die beiden Löschmittelleitungen voneinander separiert ausgeführt sind, das heißt also dass die zweite Löschmittelleitung mit ihrem dritten Ende nicht in die erste Löschmitteleitung, sondern direkt in die Batterie mündet. Dies hat auch wiederum den Vorteil, dass sich der Leitungsweg vom vierten zum dritten Ende kürzer ausgestaltet lässt, was die oben beschriebenen Vorteile hat. Dies stellt zudem die Möglichkeit bereit, dass zum Beispiel die erste Löschmittelleitung zum Löschen einer vorderen Hälfte der Batterie genutzt werden kann, und die zweite Löschmittelleitung zum Löschen einer hinteren Hälfte der Batterie, zum Beispiel wenn die Batterie in entsprechende Batteriebereiche wie oben beschrieben eingeteilt ist. Grundsätzlich ist es auch denkbar, dass das Kraftfahrzeug noch mehr als zwei Löschmittelleitungen mit entsprechenden in den Innenraum des Kraftfahrzeugs mündenden Enden zum Koppeln mit jeweiligen Löschmittelreservoiren aufweist. Dies lässt sich auf einfache Weise ohne zusätzlich großen Bauraumaufwand realisieren, da somit im Innenraumbereich jeweils nur die entsprechenden Anschlüsse, nämlich die betreffenden Kopplungselemente, vorgesehen werden müssen, ohne notwendigerweise daran auch ein Löschmittelreservoir anschließen zu müssen.

Bei einer weiteren vorteilhaften Ausgestaltung der Erfindung weist die Löschmittelleitung ein Zwischenreservoir auf, welches über das mit dem Kopplungselement gekoppelte Löschmittelreservoir mit Löschmittel befüllbar ist, wobei die Verschlusseinrichtung in einem Leitungsbereich der Löschmittelleitung zwischen dem Zwischenreservoir und dem ersten Ende der Löschmittelleitung angeordnet ist. Hierdurch ist die Möglichkeit bereitgestellt, zum Beispiel über einen Feuerlöscher ein solches im Fahrzeug integriertes Löschmittelreservoir, welches hier als Zwischenreservoir bezeichnet wird, zu befüllen. Dies kann ebenso über eine Schnellkupplung, wie oben beschrieben, erfolgen. Der Feuerlöscher ist also einfach an das Kopplungselement anschließbar und ermöglicht somit, zum Beispiel auch ein lediglich manuelles, Befüllen des Zwischenreservoirs und kann danach wieder von dem Kopplungselement entkoppelt werden, welche den Zugang zur Löschmittelleitung und damit auch zum Zwischenreservoir automatisch wieder verschließt. Der Löschmittelweg vom Zwischenreservoir zur Batterie wird allerdings erst dann freigegeben, wenn ein kritischer Zustand der Batterie beziehungsweise der mindestens einen Batteriezelle detektiert wird. Entsprechend ist es in diesem Fall vorteilhaft, wenn die Verschlusseinrichtung auf diesen Zuführpfad in Zuführrichtung nach dem Zwischenreservoir angeordnet ist, zum Beispiel an einem Ausgang des Zwischenreservoirs. Ein solches Zwischenreservoir hat im Gegensatz zu einem Feuerlöscher den Vorteil, dass dieses geometrisch an die bestehende Bauraumsituation im Kraftfahrzeug anpassbar ist. Durch die Kopplungsmöglichkeit mit einem Feuerlöscher lässt sich dieses auch besonders einfach und flexibel auffüllen. Nichtsdestoweniger stellt dies eine weniger bevorzugte Ausführungsvariante dar. Vorzugsweise ist die Löschmittelleitung ohne ein solches Zwischenreservoir ausgebildet, was den Vorteil hat, dass nicht permanent ein fest vorgegebener Bauraum für ein solches Zwischenreservoir reserviert ist.

Das erfindungsgemäße Kraftfahrzeug ist bevorzugt als Kraftwagen, insbesondere als Personenkraftwagen oder Lastkraftwagen, oder als Personenbus oder Motorrad ausgestaltet. Darüber hinaus ist das Kraftfahrzeug vorzugsweise als Elektrofahrzeug oder Hybridfahrzeug ausgebildet.

Des Weiteren betrifft die Erfindung auch ein Verfahren zum Einleiten eines Löschmittels in eine Batterie für ein Kraftfahrzeug, wobei das Löschmittel über eine Löschmittelleitung in die Batterie geführt wird, und wobei die Löschmittelleitung ein erstes Ende umfasst, welches zumindest in ein Batteriegehäuse der Batterie mündet, und ein zweites Ende aufweist, welches in einen Bereich des Kraftfahrzeugs mündet, welcher in einem Innenraum des Kraftfahrzeugs angeordnet ist. Dabei wird ein Kopplungselement des zweiten Endes mit einem das Löschmittel umfassenden Löschmittelreservoir gekoppelt, und eine unter mindestens einer vorbestimmten Bedingung freigebbare Verschlusseinrichtung der Löschmittelleitung bei Erfülltsein der mindestens einen vorbestimmten Bedingung geöffnet, um eine Zufuhr des Löschmittels in ein Inneres des Batteriegehäuses freizugeben.

Die für das erfindungsgemäße Kraftfahrzeug und seine Ausführungsformen genannten Vorteile gelten in gleicher Weise für das erfindungsgemäße Verfahren.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine schematische Darstellung eines Kraftfahrzeugs mit einer in eine Kraftfahrzeugbatterie mündenden Löschmittelleitung, an die ein Löschmittelreservoir in Form eines Feuerlöschers angeschlossen ist, gemäß einem Ausführungsbeispiel der Erfindung; und
- Fig. 2: eine schematische Darstellung eines Teils eines Innenraums des Kraftfahrzeugs mit einer im Mittelkonsolenbereich hinter den Vordersitzen mündenden Löschmittelleitung, an die ein Löschmittelreservoir in Form eines Feuerlöschers angeschlossen ist.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

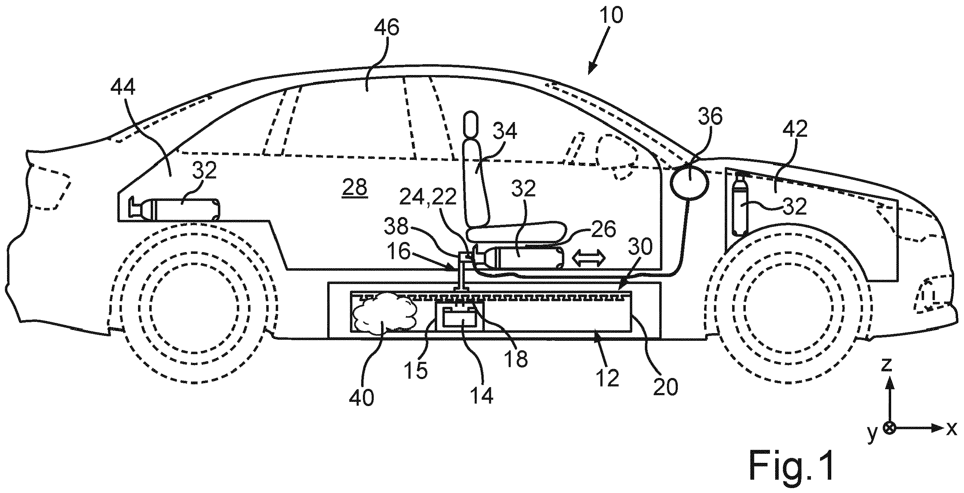

Dabei zeigt Fig.1 eine schematische Darstellung eines Kraftfahrzeugs 10 mit einer als Hochvoltbatterie 12 ausgebildeten Batterie, welche mindestens eine Batteriezelle 14, zum Beispiel eine Lithium-Ionen-Zelle, aufweist, vorzugsweise jedoch mehrere solcher Batteriezellen 14, von denen exemplarisch in der Figur nur eine dargestellt ist. Die Batteriezelle kann dabei Teil eines Batteriemoduls 15, insbesondere umfassend mehrere Batteriezellen 14, sein, wobei die Hochvoltbatterie 12 ebenfalls mehrere solcher Module 15 aufweisen kann. Weiterhin umfasst das Kraftfahrzeug eine Löschmittelleitung 16. Diese weist mindestens ein erstes Ende 18 auf, welches in die Batterie 12, insbesondere in ein Batteriegehäuse 20, der Batterie, in welchem die mindestens eine Batteriezelle 14 aufgenommen ist, mündet, sowie ein zweites Ende 22, welches ein Kopplungselement 24 umfasst, und welches in einen für einen Benutzer zugänglichen Bereich 26 des Kraftfahrzeugs 10 mündet, welcher in einem Innenraum 28 des Kraftfahrzeugs 10 angeordnet ist. In diesem Beispiel weist die Löschmittelleitung mehrere erste Enden 18 auf, von welchen aus Gründen der Übersichtlichkeit nur eines mit einem Bezugszeichen versehen ist. Diese mehreren ersten Enden 18 bilden dabei ein Verteilersystem 30. Dieses Verteilersystem 30 kann zum Beispiel dazu ausgebildet sein, das durch die Löschmittelleitung 16 in die Batterie 12 eingeführte Löschmittel möglichst gleichmäßig über die gesamte Batteriefläche zu verteilen. Besonders vorteilhaft ist es aber vor allem, wenn ein solches Verteilersystem 30 dazu ausgelegt ist, das Löschmittel selektiv in einzelne räumlich voneinander separierte Bereiche der Batterie 12 einzuführen, zum Beispiel direkt in jeweils betroffene Batteriemodule 15, wie in Fig. 1 dargestellt. Zu diesem Zweck kann zum Beispiel jedes Ende 18 der mehreren in der hier dargestellten x-y-Ebene verteilt angeordneten ersten Enden 18 mit einem entsprechenden Ventil versehen ist. Diese Ventile können dabei unabhängig voneinander ansteuerbar ausgebildet sein, sodass gezielt diejenigen Ventile angesteuert werden können, die einem entsprechenden Batteriebereich bzw. Batteriemodul 15 zugeordnet sind, in welchem sich die Batteriezelle 14 befindet, die einen kritischen Zustand aufweist. Dadurch kann, selbst wenn nur eine begrenzte Menge an Löschmittel zur Verfügung steht, ein effektives Löschen oder auch Kühlen einer solchen Batteriezelle 14 bereitgestellt werden, da das Löschmittel gezielt in den räumlich separierten Bereich, in welchen diese Batteriezelle 14 aufgenommen ist, eingeleitet werden kann.

Besonders vorteilhaft ist es aber nun, dass ein Löschmittelreservoir, wie in diesem Beispiel ein dargestellter Feuerlöscher 32, insbesondere ein Lithiumlonen-Feuerlöscher, reversibel mit dem Kupplungselement 24 des zweiten Endes 22 der Löschmittelleitung 16 gekoppelt werden kann. So kann vorteilhafterweise ein solcher Feuerlöscher 32, zumindest temporär, in das Fahrzeug 10, zum Beispiel unter der Sitzstruktur, wie in diesem Beispiel unter dem Vordersitz 34, integriert werden. Der Feuerlöscher 32 ist, wie dargestellt, über das vorzugsweise als Schnellkupplung ausgebildete Kopplungselement 24 mit der durch die Löschmittelleitung 16 bereitgestellten Zuleitung verbunden, welche Löschmedium, welches im Feuerlöscher 32 aufgenommen ist, nach Auslösung in eine optionale Löschmittelverteilereinheit, das genannte Verteilersystem 30, innerhalb der Hochvoltbatterie leitet. Die Schnellkupplung 24 kann mit der Fahrzeugarchitektur, insbesondere der elektrischen beziehungsweise elektronischen Fahrzeugarchitektur, beispielsweise dem Bordnetz 36, verbunden sein und kann automatisiert, im Falle einer thermischen Propagation, welche beispielsweise über Sensoren in der Hochvoltbatterie 12 detektiert wird, ausgelöst werden. Dieses Auslöseereignis kann im Bordnetz 36 erfasst werden und entsprechend die Schnellkupplung 24 angesteuert werden, um eine in der Schnellkupplung 24 integrierte Verschlusseinrichtung 38 zu öffnen. Durch das Öffnen dieser Verschlusseinrichtung 38 wird der Löschmittelpfad vom zweiten Ende 22 der Löschmittelleitung zur zumindest einen der ersten Enden 18 der Löschmittelleitung 16 freigegeben, wodurch das Löschmittel in die Batterie 12 zum Kühlen der betreffenden Batteriezelle 14 beziehungsweise zum Löschen eines gegebenenfalls schon entstandenen Brandes 40 eingeleitet werden kann. Wie beschrieben, kann die Löschmittelverteilereinheit, das heißt das Verteilersystem 30, das Löschmedium lokal in eine oder mehrere Batteriezellen 14 einleiten, welche sich gerade in der thermischen Propagation befindet. Dies ist über einen Temperaturanstieg an Temperatursensoren detektierbar, die verteilt in der Hochvoltbatterie 12 angeordnet sind. Mit der Detektion eines kritischen Zustands der Batteriezelle 14 kann gleichzeitig auch ein automatischer Notruf, z.B. ein eCall, ausgelöst werden. Zwischenzeitlich, das heißt noch vor dem Eintreffen der Feuerwehr, kann nun vorteilhafterweise mit dem Lösch- oder Kühlvorgang begonnen werden, um so das Ausbreiten der thermischen Propagation zu unterbinden oder zumindest hinauszuzögern. Dies schafft wertvolle Rettungsminuten für Insassen.

Ein solcher Feuerlöscher 32 oder auch mehrere Feuerlöscher 32 können sich unter mehreren Sitzen 34 befinden, jedoch aber auch im Frontkofferraum 42, der ebenfalls als Teil des Innenraums 28 angesehen werden soll, sowie auch im Heckkofferraum 44 als Teil des Innenraums 28, im Dachbereich des Innenraums 28 und so weiter. Es ist ebenso eine Kombination mehrerer Feuerlöscher 32 an verschiedenen Positionen im Innenraum 28 des Kraftfahrzeugs 10 möglich. So können vor allem sehr effizient Toträume, wie zum Beispiel typischerweise die Reserveradmulde, oder ähnliches effizient genutzt werden. Entsprechend kann auch an den jeweiligen genannten Positionen eine korrespondierend Schnellkupplung 24 als Teil einer korrespondierenden Löschmittelleitung 16 vorgesehen sein, die mit ihrem anderen Ende jeweils in die Batterie 12 mündet. Je kürzer dabei der zur Batterie 12 zurückzulegende Weg der Löschmittelleitung 16 ist, desto besser. Entsprechend ist eine Position zum Beispiel unterhalb eines Vordersitzes 34, wie vorliegend dargestellt, besonders vorteilhaft.

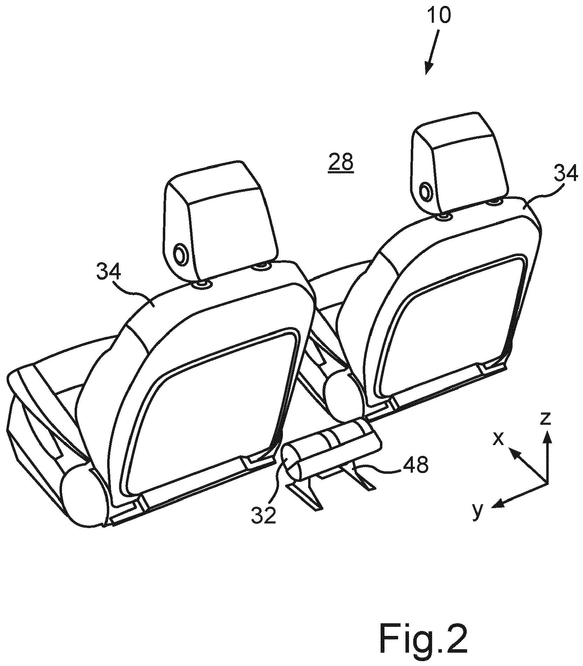

Eine weitere vorteilhafte Position ist auch in Fig. 2 dargestellt, die einen Teil des Innenraums 28 des Kraftfahrzeugs 10 zeigt, wobei in diesem Beispiel das zweite Ende 22 mit dem Kopplungselement 24 und einem daran angeschlossenen als Feuerlöscher 32 ausgebildeten Löschmittelreservoir in einem Bereich 48 einer Mittelkonsole hinter den Vordersitzen 34 und vor z.B. einer nicht dargestellten Rücksitzbank angeordnet ist. Dieser Bereich 48 befindet sich in diesem Beispiel in einer Mitte bezüglich der Fahrzeugquerrichtung, die zur hier dargestellten y Richtung korrespondiert.

Die Schnellkupplung 24 hat zudem den Vorteil, dass ein Benutzer den betreffenden Feuerlöscher 32 entfernen kann, um beispielsweise auch einen Brand außerhalb des Fahrzeugs als Ersthelfer zu löschen. Ein weiterer Vorteil ist es, dass der Benutzer oder die Feuerwehr eine leere Feuerlöscherkartusche 32 gegen eine neue, das heißt volle, austauschen kann. Ein Feuerlöscher 34 hat zudem ein Ablaufdatum, sodass hierdurch auch eine einfache Austauschbarkeit im Service von großem Vorteil ist. Zudem lässt sich der im Kraftfahrzeug 10 zur Verfügung stehende Bauraum deutlich effizienter nutzen. Sind zum Beispiel mehrere solcher Löschmittelleitungen 16 vorgesehen, so kann zum Beispiel ein Benutzer auch selbst entscheiden, an welcher Stelle er einen Feuerlöscher 32 positionieren möchte, je nach zur Verfügung stehendem Bauraum.

Die Schnellkupplung 24 kann zudem einen Mechanismus bereitstellen, der es ermöglicht, den Feuerlöscher 32 beim Ankoppeln automatisch scharfzustellen, das heißt eine dem Feuerlöscher 32 zugeordnete Verschlusseinrichtung zu öffnen. Dies stellt eine besonders komfortable Kopplungsmöglichkeit bereit, da so der Feuerlöscher 32 im gekoppelten Zustand sofort einsatzbereit ist. Das automatische Öffnen eines solchen Verschlusses kann dabei zum Beispiel auch elektrisch gesteuert sein. Alternativ kann es auch vorgesehen sein, dass zunächst ein Benutzer einen solchen Entriegelungsschritt zum Entriegeln des Feuerlöschers 32 vornehmen muss. Dies kann der Benutzer aber dennoch auf einfache Weise vornehmen, wenn dieser den Feuerlöscher mit der Schnellkupplung 24 koppelt. Hierzu kann der Benutzer zum Beispiel, wie dies von herkömmlichen Feuerlöschern bekannt ist, einen Entriegelungszapfen aus dem Feuerlöscher 32 entfernen und zum Beispiel den Hebel des Feuerlöschers 32 drücken beziehungsweise aktivieren, wie bei der normalen Verwendung eines Feuerlöschers zum Freisetzen des Löschmittels. Der Feuerlöscher kann hierzu zudem mit einer Feststelleinrichtung ausgebildet sein und/oder eine solche Feststelleinrichtung zum Feststellen dieses Hebels kann fahrzeugseitig vorgesehen sein. Nichtsdestoweniger führt diese Scharfstellung des Feuerlöschers 32 nicht unmittelbar zum Austritt des Löschmittels aus dem Feuerlöscher 32, was durch die Verschlusseinrichtung 38 der Löschmittelleitung 16 sichergestellt ist, die vorzugsweise in die Schnellkupplung 24 integriert ist. Auch im scharfgestellten Zustand des Feuerlöschers 32 wird damit effizient ein Eindringen des Löschmittels in die Löschmittelleitung 16 vor Auslösen beziehungsweise vor der Detektion eines kritischen Zustands einer Batteriezelle 14 verhindert.

Insgesamt zeigen die Beispiele, wie durch die Erfindung ein Batterielöschverfahren mit Feuerlöscher bereitgestellt werden kann, welches es ermöglicht, die Reaktionsrate bei einer thermischen Propagation durch die schnelle Einsatzbereitschaft enorm zu reduzieren und dadurch eine effektive Verringerung der Rettungszeit, bis die Feuerwehr eintrifft beziehungsweise während die Feuerwehr bereits an der Rettung arbeitet, bereitzustellen. Durch die sehr frühzeitige Einsatzbereitschaft kommt es in der Regel auch zu einer insgesamt deutlich geringeren Beschädigung des Gesamtfahrzeugs im Falle einer thermischen Propagation einer Batteriezelle. Außerdem kann es zum Beispiel durch das Vorsehen einer oben beschriebenen Verteilereinheit erreicht werden, dass intakte Batteriezellen nicht unnötig negativ vom Kühlmittel beeinflusst werden. Insgesamt wird so eine erhöhte Sicherheit für Feuerwehr und umstehende Personen und Infrastrukturelementen erreicht. Zudem bietet die Erfindung auch ein hohes Potential für branchenübergreifende Normung und Standardisierung.

## Patentansprüche

1. Kraftfahrzeug (10) mit einer Batterie (12), die ein Batteriegehäuse (20) und mindestens eine im Batteriegehäuse (20) angeordnete Batteriezelle (14) aufweist, wobei das Kraftfahrzeug (10) eine Löschmittelleitung (16) zur Führung eines Löschmittels aufweist, die ein erstes Ende (18) umfasst, welches zumindest in das Batteriegehäuse (20) mündet, und ein zweites Ende (22) aufweist, welches in einen Bereich (26, 42, 44, 46) des Kraftfahrzeugs (10) mündet, welcher in einem Innenraum (28) des Kraftfahrzeugs (10) angeordnet ist,
**dadurch gekennzeichnet, dass**
das zweite Ende (22) ein Kopplungselement (24) zum Koppeln mit einem Löschmittelreservoir (32) aufweist, wobei die Löschmittelleitung (16) eine unter mindestens einer vorbestimmten Bedingung freigebbare Verschlusseinrichtung (38) aufweist, die eine Löschmittelzufuhr durch das erste Ende (18) in ein Inneres des Batteriegehäuses (20) nur bei Erfülltsein der mindestens einen vorbestimmten Bedingung freigibt.

2. Kraftfahrzeug (10) nach Anspruch 1,
**dadurch gekennzeichnet, dass**
die Löschmittelleitung (16) derart ausgeführt ist, dass wenn das Löschmittelreservoir (32) mit einem im Löschmittelreservoir (32) aufgenommenen Löschmittel mit dem Kopplungselement (24) gekoppelt ist, und wenn die mindestens eine vorbestimmte Bedingung erfüllt ist, das Löschmittel durch Freigeben der Verschlusseinrichtung (38) automatisch in das Innere des Batteriegehäuses (20) führbar ist.

3. Kraftfahrzeug (10) nach einem der vorhergehenden Ansprüche,
**dadurch gekennzeichnet, dass**
das Kopplungselement (24) als Teil einer Schnellkupplung (24) ausgestaltet ist.

4. Kraftfahrzeug (10) nach einem der vorhergehenden Ansprüche,
**dadurch gekennzeichnet, dass**
die Verschlusseinrichtung (38) im Kopplungselement (24) integriert ist.

5. Kraftfahrzeug (10) nach einem der vorhergehenden Ansprüche,
**dadurch gekennzeichnet, dass**
die erste Bedingung erfüllt ist, wenn ein kritischer Zustand der mindestens einen Batteriezelle (14) gemäß einem vorbestimmten Kriterium erfasst ist, insbesondere wenn eine Temperatur innerhalb des Batteriegehäuses (20) größer ist als ein vorbestimmter Grenzwert, der zwischen einschließlich 60°C und 80°C liegt.

6. Kraftfahrzeug (10) nach einem der vorhergehenden Ansprüche,
**dadurch gekennzeichnet, dass**
das Kopplungselement (24) zur Kopplung mit einem als Feuerlöscher (32), insbesondere Lithium-Ionen-Feuerlöscher (32), ausgebildeten Löschmittelreservoir (32) ausgebildet ist.

7. Kraftfahrzeug (10) nach einem der vorhergehenden Ansprüche,
**dadurch gekennzeichnet, dass**
der Bereich (26, 42, 44, 46) des Kraftfahrzeugs (10) unter einem Sitz (34) des Kraftfahrzeugs (10), insbesondere einem Vordersitz (34), und/oder im Bereich einer Mittelkonsole des Kraftfahrzeugs (10) und/oder im Bereich der Fond-Mittelkonsole des Kraftfahrzeugs (10) und/oder in einem Fußraum der Beifahrerseite des Kraftfahrzeugs (10) und/oder in einem Kofferraum (42, 44) des Kraftfahrzeugs (10) angeordnet ist.

8. Kraftfahrzeug (10) nach einem der vorhergehenden Ansprüche,
**dadurch gekennzeichnet, dass**
das Kraftfahrzeug (10) eine zweite Löschmittelleitung (16) zur Führung eines Löschmittels aufweist, die ein drittes Ende (18) umfasst, welches in das Batteriegehäuse (20) oder in die erste Löschmittelleitung (16) mündet, und ein viertes Ende (22) aufweist, welches in einen für einen Benutzer zugänglichen zweiten Bereich (26, 42, 44, 46) des Kraftfahrzeugs (10), welcher in einem Innenraum (28) des Kraftfahrzeugs (10) angeordnet ist, mündet, wobei das vierte Ende (22) ein zweites Kopplungselement (24) zum reversiblen Koppeln mit einem Löschmittelreservoir (32) aufweist.

9. Kraftfahrzeug (10) nach einem der vorhergehenden Ansprüche,
**dadurch gekennzeichnet, dass**
die Löschmittelleitung (16) ein Zwischenreservoir aufweist, welches über das mit dem Kopplungselement (24) gekoppelte Löschmittelreservoir (32) mit Löschmittel befüllbar ist, wobei die Verschlusseinrichtung (38) in einem Leitungsbereich der Löschmittelleitung (16) zwischen dem Zwischenreservoir und dem ersten Ende (18) der Löschmittelleitung (16) angeordnet ist.

10. Verfahren zum Einleiten eines Löschmittels in eine Batterie (12) für ein Kraftfahrzeug (10), wobei das Löschmittel über eine Löschmittelleitung (16) in die Batterie (12) geführt wird, wobei die Löschmittelleitung (16) ein erstes Ende (18) umfasst, welches zumindest in ein Batteriegehäuse (20) der Batterie (12) mündet, und ein zweites Ende (22) aufweist, welches in einen Bereich (26, 42, 44, 46) des Kraftfahrzeugs (10), welcher in einem Innenraum (28) des Kraftfahrzeugs (10) angeordnet ist, mündet,
**dadurch gekennzeichnet, dass**
ein Kopplungselement (24) des zweiten Endes (22) mit einem das Löschmittel umfassenden Löschmittelreservoir (32) gekoppelt wird, und eine unter mindestens einer vorbestimmten Bedingung freigebbare Verschlusseinrichtung (38) der Löschmittelleitung (16) bei Erfülltsein der mindestens einen vorbestimmten Bedingung geöffnet wird, um eine Zufuhr des Löschmittels in ein Inneres des Batteriegehäuses (20) freizugeben.
